# EUROPEAN PATENT APPLICATION

(11) **EP 2 932 857 A1**
(43) Date of publication of application: **21.10.2015**
(21) Application number: 13861639.6
(22) Date of filing: 12.12.2013
(51) Int. Cl.: A23K 1/18, A23K 1/10, A23K 1/14, A23K 1/16

(54) **PET FOOD**

(30) Priority: 13.12.2012 JP 2012272893
(71) Applicant: Unicharm Corporation, Shikokuchuo-shi, Ehime 799-0111 (JP)
(72) Inventor: IKEZAKI, Yuma, Itami-shi Hyogo 664-0831 (JP); SAKODA, Junya, Itami-shi Hyogo 664-0831 (JP)
(74) Representative: Peter, Julian
(86) International application number: PCT/JP2013/083364
(87) International publication number: WO 2014/092158

(57) **Abstract**

To provide a wet-type pet food that allows stabilization of quality by fine adjustment of mineral amounts and is superior in preference qualities. A pet food containing at least 5% by mass and no greater than 50% by mass of solids, comprising: an animal-derived protein raw material; a plant-derived protein raw material; magnesium, sodium, phosphorous and chlorine; a preference improving substance composed mainly of a chicken-derived amino acid; and water, wherein: a ratio by mass of a total content of the plant-derived protein raw material to a total content of the animal-derived protein raw material is at least 0.15; and a total content of the magnesium, the sodium, the phosphorous and the chlorine in the solids is no greater than 5% by mass in terms of element content.

## Description

### TECHNICAL FIELD

The present invention relates to a pet food. More specifically, the present invention relates to a wet pet food allowing prevention of formation of urolith in pet animals such as cats and having superior preference qualities for a pet.

### BACKGROUND ART

It is known that a calculus may be formed in the urinary tract of pets such as dogs and cats. In addition, it is known that variation in pH and constituents of pet urine caused by minerals in a pet food is the reason for formation of a urolith. In order to overcome this obstacle, for example Patent Document 1 discloses that formation of a urolith in canine pets can be suppressed by limiting the contents of minerals such as magnesium and phosphorus in a pet food to within a predetermined range.

Patent Document 1: Japanese Unexamined Patent Application (Translation of PCT Application), Publication No. 2003-518938

### DISCLOSURE OF THE INVENTION

### Problems to be Solved by the Invention

As described above, it is well known that formation of a urolith in pets can be suppressed by adjusting the mineral contents of a pet food. Therefore, in a pet food for cats that is especially expected to suppress formation of a urolith, contents of minerals such as magnesium and phosphorus are required to be within fixed ranges during its manufacture.

Meanwhile, a conventional general pet food for cats contains animal-derived protein raw materials such as chicken meat and fish meal as protein sources. These animal-derived protein sources improve preference qualities of the pet food. However, since these animal-derived protein sources are rich in minerals such as magnesium, phosphorus and the like, and mineral amount varies from individual to individual of source animals, there are substantial variations in mineral amounts between production lots of the pet food. The animal-derived protein sources have therefore been a factor of lowering quality stability in production of a pet food and the like for cats in which fine adjustment of mineral contents is required.

Given this, in production of a pet food and the like for cats, plant-derived protein sources such as wheat gluten and corn gluten, which have low contents of minerals which cause urolith and produce pet foods which have a relatively small variation in the amounts of minerals between production lots, can be employed instead of chicken meal, fish meal and the like which are animal-derived. If the mineral amount of protein sources in the pet food is small, a required amount of calcium or the like can be separately added as an inorganic compound. Consistency in quality can thus be improved by finely adjusting mineral contents in production of a pet food and the like for cats.

However, the pet food using the plant-derived protein sources instead of the animal-derived protein sources has deteriorated preference qualities and intake thereof by a pet decreases. In other words, in a pet food requiring fine adjustment of the contents of minerals such as magnesium, phosphorus, and the like, for example a pet food for cats expected to suppress formation of a urolith, sacrifice of the preference qualities is currently unavoidable in order for fine adjustment of the mineral contents, and further improvement in this regard has been desired.

Among pet foods, there are dry type pet foods and wet type pet foods. The wet type pet foods contain a larger amount of water than the dry type pet foods and more minerals causing a urolith can be dissolved. Therefore, the wet type pet foods are less likely to cause a urolith compared to the dry type pet foods. However, even the wet type pet foods currently cannot sufficiently suppress formation of a urolith in pets consuming it. Therefore, even the wet type pet foods require fine adjustment of mineral amounts.

The present invention has been made in view of the abovementioned situation and is aimed at providing a pet food allowing adjustment of mineral content and having superior preference qualities for a pet.

### Means for Solving the Problems

The present inventors have conducted extensive research in order to overcome the abovementioned problem and have found that amounts of magnesium, phosphorus and the like derived from protein raw materials can be reduced by making a ratio by mass of a total content of a plant-derived protein raw material to a total content of an animal-derived protein raw material in a wet-type pet food higher than a predetermined value, and that deterioration of preference qualities can be sufficiently prevented by including a preference improving substance composed mainly of amino acid. More specifically, the present invention provides the following.
(1) A pet food containing at least 5% by mass and no greater than 50% by mass of solids, comprising: an animal-derived protein raw material; a plant-derived protein raw material; magnesium, sodium, phosphorous and chlorine; a preference improving substance composed mainly of a chicken-derived amino acid; and water, wherein: a ratio by mass of a total content of the plant-derived protein raw material to a total content of the animal-derived protein raw material (total content of the plant-derived protein raw material / total content of the animal-derived protein raw material) is at least 0.15; and a total content of the magnesium, the sodium, the phosphorous and the chlorine in the solids is no greater than 5% by mass in terms of element content.
(2) The pet food according to (1), wherein: the animal-derived protein raw material includes chicken tenderloin; a content of the chicken tenderloin in the animal-derived protein raw material is at least 30% by mass and no greater than 60% by mass; a content of the preference improving substance is at least 0.3% by mass and no greater than 5% by mass.
(3) The pet food according to (1) or (2), wherein the content of the magnesium in the solids is no greater than 0.07% by mass.
(4) The pet food according to any one of (1) to (3), wherein the content of the sodium in the solids is no greater than 1.5% by mass.
(5) The pet food according to any one of (1) to (4), wherein the content of the phosphorous in the solids is no greater than 1% by mass.
(6) The pet food according to any one of (1) to (5), wherein the pet food is a food for cats.
(7) The pet food according to (6), wherein the cats are at least 1 year old and no greater than 10 years old.

### Effects of the Invention

According to the present invention, by increasing a ratio by mass of a total content of the plant-derived protein raw material to a total content of the animal-derived protein raw material, mineral amounts can be finely adjusted and a pet food with smaller variations between production lots can be provided. In addition, the wet type pet food of the present invention can sufficiently prevent deterioration of preference qualities by including chicken tenderloin as well as a preference improving substance composed mainly of chicken derived amino acid.

### PREFERRED MODE FOR CARRYING OUT THE INVENTION

An embodiment of the present invention is described in detail hereinafter; however, it should be noted that the present invention is not limited thereto, and can be changed and implemented as necessary to implement in the scope of the objective of the present invention.

### Basic Formulation of Pet Food

The pet food of the present embodiment contains an animal-derived protein raw material; a plant-derived protein raw material; magnesium, sodium, phosphorous and chlorine; a preference improving substance composed mainly of a chicken-derived amino acid; and water.

In the present embodiment, a pet food designates a feed with high water content, among feeds provided to pet animals. The pet food of the present embodiment is a so-called wet-type pet food containing at least 5% by mass and no greater than 50% by mass of solids, in other words at least 50% by mass and no greater than 95% by mass of water. As used herein, solids are components of the pet food other than water, in other words components remaining after removing all moisture from raw materials of the pet food. In addition, water content is a content of water including moisture derived from raw materials of the pet food other than water.

Pet animals include animals kept by and living with humans and there is no particular limitation thereto. The pet food according to the present embodiment is for cats and is a feed containing desired nutrient components according to ages and constitutions of cats.

First, raw materials used for the pet food and blending quantities thereof are described. The blending quantities of raw materials used in the pet food are quantities with respect to an entire pet food, without distinguishing a chunk portion, a flake portion, and a soup portion, unless otherwise noted.

As an example, 0.5 to 15% by mass of animal oil and fat, 0.01 to 1.5% by mass of minerals and vitamins as a single component, an adequate amount of moisture of at least 12% by mass, and 10 to 40% by mass of a protein raw material described later are included.

### Protein Raw Material

In the present embodiment, the protein raw material designates a product containing protein among materials blended into the pet food in order to make the protein content of the pet food within a preferable range. More specifically, the protein content measured according to the Kjeldahl method is preferably at least 10% by mass and no greater than 50% by mass. The protein raw material includes an animal-derived protein raw material, which can be obtained by processing meat such as pork and chicken and egg, and a plant-derived protein raw material, which can be obtained by processing cereals such as wheat.

The plant-derived protein raw material designates a plant-derived processed product containing protein. Here, the abovementioned plant-derived protein raw material does not include cereals such as wheat and corn, which have not been subjected to special processes other than mere drying and cutting and of which fiber is substantially not removed, even if such cereals contain protein. Specific examples of the plant-derived protein raw material include a wheat processed product such as wheat gluten, a corn processed product such as corn gluten, soy protein, and the like. These have low contents of minerals such as magnesium, and display relatively small variations in mineral contents from batch to batch, compared to the animal-derived protein raw material described later. Among these, wheat gluten, which is easy to obtain and has superior mineral content consistency, can be preferably used. It should be noted that the wheat gluten in the present embodiment is protein derived from wheat endosperm. In addition, the content of the wheat gluten in the pet food is preferably at least 1% by mass and no greater than 20% by mass. By making the content of the wheat gluten within the above range, the amount of protein required in the pet food can be secured while reducing the amount of minerals derived from the protein raw materials.

The animal-derived protein raw material designates an animal-derived processed product containing protein. Here, the abovementioned animal-derived protein raw material does not include animal oil and fat not composed mainly of animal meat, such as beef fat and chicken fat, as well as the preference improving substance described later, even if such materials contain protein.

Specific examples of the animal-derived protein raw material include a processed product composed mainly of animal meat such as pork meat, chicken meat, and fish meat. These are protein sources which contain a larger number of amino acids than the plant-derived protein raw material and can also serve as an umami component that improves preference qualities of the pet food; however, they each have a high mineral content, and display a relatively large variation in mineral content from individual to individual, compared to the plant-derived protein raw material described above. It should be noted that, the mineral content of the animal-derived protein raw material is generally at least 5% by mass and no greater than 30% by mass, which is a value in crude ash measured according to the heating ashing method.

In the present embodiment, among the above described protein raw materials, a ratio by mass of a total content of the plant-derived protein raw material to a total content of the animal-derived protein raw material (total content of the plant-derived protein raw material / total content of the animal-derived protein raw material) is at least 0.15 and preferably at least 0.18. If the ratio of a total content of the plant-derived protein raw material to a total content of the animal-derived protein raw material is smaller than 0.15, the amount of minerals derived from the protein raw materials increases, and consistent adjustment of the mineral content in a pet food product in each production lot within an adequate range becomes difficult.

The content of the plant-derived protein raw material in the pet food is preferably at least 2% by mass, and more preferably at least 4% by mass. The content of the animal-derived protein raw material in the pet food is preferably no greater than 30% by mass, and more preferably no greater than 25% by mass. By making the composition of the protein raw materials within the above range, the amount of protein required in the pet food can be secured while reducing the amount of minerals derived from the protein raw materials. By reducing the amount of minerals derived from the protein raw materials in the pet food, the mineral content of the pet food product can be reduced.

Specifically, the pet food of the present embodiment preferably includes chicken tenderloin. By using along with the preference improving substance described later, the preference qualities of the pet food are improved. In addition, a content of the chicken tenderloin in the animal-derived protein raw material contained in the pet food of the present embodiment is preferably at least 30% by mass and no greater than 60% by mass. Since the chicken tenderloin is low in mineral content, by making the content of the chicken tenderloin in the animal-derived protein raw material contained in the pet food within the above range, the mineral content of the pet food product can be reduced.

Conventionally, pork meat and chicken meat are widely used as the animal-derived protein raw material; however, in the pet food of the present embodiment, it is preferable to use a fish-derived protein raw material as a main protein source. Meals made from bonito, horse mackerel, tuna, white bait and the like can be exemplified as the fish-derived protein raw material. The fish-derived protein raw material is rich in omega-3 fatty acids and contributes to prevention of diseases in cats and the like. If a large amount of the fish-derived protein raw material as the animal-derived protein raw material is used as a raw material of the pet food, the mineral content of the pet food tends to be high; however, by using a large amount of the plant-derived protein raw material which has a low mineral content, the mineral content of the pet food can be suppressed. In addition, deterioration of preference qualities due to an increase in the content of the plant-derived protein raw material can be compensated for by the preference improving substance described later.

### Mineral Content

The content of magnesium, sodium, phosphorous and chlorine in the solids of the pet food of the present embodiment is no greater than 5% by mass. By making the content of magnesium, sodium, phosphorous and chlorine in the pet food no greater than 5% by mass, risk of formation of urolith in pets can be reduced. The content of magnesium, sodium, phosphorous and chlorine designates a total content of these elements in terms of element content. The content of magnesium, sodium, phosphorous and chlorine can be measured by the conventionally well-known ICP spectrometry. In addition, from the viewpoint of prevention of urolith formation, it is more preferable to adjust the total content of magnesium, sodium, and phosphorous to no greater than 3% by mass.

Magnesium, sodium, phosphorous and chlorine, which are minerals causing urolith in pets, are reduced in the pet food of the present embodiment; however, as these minerals are reduced, other minerals required for growth and health of pets are also reduced. The minerals required for growth and health of pets can be finely adjusted by inorganic compound described later. As such fine adjustment of minerals contained in the pet food is thus realized, preparation of various types of pet food with fine adjustment of types and amounts of minerals required for growth and health of pets according to ages and conditions of pets becomes easy.

In addition, by making the content of magnesium in the solids of the pet food no greater than 0.07% by mass, urolith in pets can be prevented more preferably. It is more preferable to make the content of magnesium in the solids of the pet food no greater than 0.0065% by mass.

In addition, by making the content of sodium in the solids of the pet food no greater than 1.5% by mass, urolith in pets can be prevented more preferably. It is more preferable to make the content of sodium in the solids of the pet food no greater than 1% by mass.

In addition, by making the content of phosphorus in the solids of the pet food no greater than 1% by mass, urolith in pets can be prevented more preferably. It is more preferable to make the content of phosphorus in the solids of the pet food no greater than 0.8% by mass.

In addition, with the pet food of the present embodiment, variation in mineral contents in the solids of the pet food in each product lot can be made no greater than 1%. Since the amount of minerals contained in the pet food of the present embodiment is small, the variation in mineral contents in each product lot is also small. As used herein, the variation in mineral contents in each product lot designates a difference between a maximum value (% by mass) and a minimum value (% by mass) of the mineral amount in each product lot among 10 lots, a product lot being 50 kg to 100 kg.

### Inorganic Compound

In the present embodiment, the pet food further contains an inorganic compound for supplementing minerals required for growth and health of pets. The mineral content can thus be adjusted within a predetermined range. In the present embodiment, the amount of minerals derived from the protein raw materials is reduced by increasing the ratio of the content of the plant-derived protein raw material to the content of the animal-derived protein raw material. By reducing the amount of minerals derived from the protein raw materials in the pet food, other minerals required for growth and health of pets are also reduced; however, the mineral content of the pet food can be adjusted by adding the inorganic compound.

The inorganic compound for supplementing minerals required for growth and health of pets can be selected as appropriate according to a type and amount of mineral required; and calcium sulfate, calcium carbonate and the like can be exemplified as a calcium source, and potassium chloride and the like can be exemplified as a potassium source.

### Preference Improving Substance

In the present embodiment, the preference improving substance is a chicken extract containing amino acids that is added to the pet food for improving preference qualities. The preference improving substance contained in the pet food of the present embodiment is composed mainly of chicken derived amino acids. More specifically, the preference improving substance contained in the pet food of the present embodiment is a substance obtained by decomposing protein of chicken meat into amino acids, and is composed mainly of amino acids generated by decomposition of protein of chicken meat. As the preference improving substance, commercially available chicken extract and chicken liver hydrolysate can be used.

In the pet food of the present embodiment, among the protein raw materials, a ratio by mass of a total content of the plant-derived protein raw material to a total content of the animal-derived protein raw material is made greater than a predetermined value; however, with such a raw material blending ratio, while the consistency in adjusting the amounts of minerals is increased, the preference qualities are expected to deteriorate due to decrease in an umami component such as amino acids contained in animal meat and the like. However, in the pet food of the present embodiment, the preference qualities are improved by adding the preference improving substance. The consistency in adjusting the amounts of minerals and maintenance of the preference qualities are thus realized at the same time, which has conventionally been difficult.

It is preferable that the pet food of the present embodiment contains at least 0.3% by mass and no greater than 5% by mass of the preference improving substance. An amount of the preference improving substance contained in the pet food smaller than 0.3% by mass does not sufficiently improve the preference qualities for pets; and an amount greater than 5% by mass makes pets consume an excessive amount of amino acids which is not preferable. It is more preferable that the pet food of the present embodiment contains at least 1% by mass and no greater than 3% by mass of the preference improving substance.

It should be noted that, even if the preference improving substance contains protein, the preference improving substance is not considered to be included in the above described animal-derived protein raw material.

In addition, the preference improving substance contained in the pet food of the present embodiment can be contained in any portion of the pet food, but preferably contained in the soup portion (described later) of the pet food. Configuration of Pet Food

The wet type pet food of the present embodiment is generally composed of a chunk portion, a flake portion, and a soup portion.

The chunk portion is in a shape of a meat lump. Size and shape of the chunk portion can be adjusted as appropriate in a production method of the pet food described later. The size and shape of the chunk portion are adjusted as appropriate according to ages and constitutions of cats.

The flake portion is composed mainly of flake-shaped meat pieces. Size and shape of the flake portion can also be adjusted as appropriate in the production method of the pet food described later. The size and shape of the flake portion are also adjusted as appropriate according to ages and constitutions of cats.

The soup portion is in a liquid form or a gel form. The quantity and viscosity of the soup portion are also adjusted as appropriate according to ages and constitutions of cats.

As described above, the pet food of the present embodiment includes the chunk portion, the flake portion, and the soup portion; however, the pet food of the present invention does not need to include all of these. For example, the present invention can be applied to a wet-type pet food without the flake portion.

### Production Method of Pet Food

The pet food of the present embodiment can be produced by the method described below, including: a chunk portion preparation step; a flake portion preparation step; a soup portion preparation step; and a blending step of preparing a base meat by blending the chunk portion and the flake portion; and a soup portion adding step of adding the soup portion to the base meat.

### [Chunk Portion Preparation Step]

First, in the chunk portion preparation step, a chunk is prepared by adding various vitamins, various mineral sources, water, and the like to the animal-derived protein raw material and the plant-derived protein raw material which are basic ingredients of the chunk portion, and blending by a blender. The chunk is extruded by a nozzle and steamed. The chunk is cut once the temperature thereof is lowered to around room temperature.

### [Flake Portion Preparation Step]

Red-fleshed fish, chicken tenderloin and the like, which are basic ingredients of the flake portion, are steamed. After steaming, temperature of the basic ingredients of the flake portion is lowered to room temperature. From the basic ingredients of the flake portion of which temperature is lowered to room temperature, skin, bones, and other foreign matters are removed as necessary, to thereby obtain the flake portion.

### [Soup Portion Preparation Step]

Various gelation agents, various vitamins, the preference improving substance, water, and the like, which are basic ingredients of the soup portion, are combined and blended by a blender.

### [Blending Step]

The chunk portion and the flake portion prepared in the above described steps are blended with various gelation agents to thereby prepare the base meat.

### [Soup Portion addition Step]

The soup portion is added to the base meat prepared by the above described step.

The pet food prepared by the above described steps is made into a product by packing into a pouch or a can. The pet food can be made into individual products by, after blending all ingredients, dividing into small portions and packing into pouches or the like. However, in this manner, equal division of the pet food is difficult and suppression of variation in the amount of minerals contained in each product within a lot is difficult. Given this, in the production method of the pet food in the present embodiment, it is preferable to sequentially fill pouches or the like, which are containers for individual products, with the base meat and the soup portion. The variation in the amount of minerals contained in the pet food in each product within a lot can be suppressed in such a way.

The pet food of the present invention is preferably used for cats of at least 1 year old and no older than 10 years old, which tend to suffer from struvite uroliths caused by magnesium.

### EXAMPLES

The present invention is described more specifically hereinafter with reference to Examples; however, the present invention is not limited thereto. Unless otherwise noted, "%" is based on mass.

### Preparation of Chunk Portion

The ingredients shown in Table 1 with their blend ratios were blended by a blender, and the ingredients thus blended were extruded by a nozzle. The ingredients thus extruded were steamed. The temperature of the chunk thus steamed was lowered to room temperature. The chunk, the temperature of which was lowered to room temperature, was cut into dice-shaped pieces of 3 to 5 mm on a side, to thereby obtain the chunk portion.

**[Table 1]**

| Ingredients Blend Ratio(mass %) | | Chunk Portion 1 | Chunk Portion 2 |
|---|---|---|---|
| Animal-derived Protein Raw Material | Fish Meat | 18.750 | 22.200 |
| | Other than Fish Meat | 11.000 | 15.500 |
| Plant-derived Protein Raw Material | | 26.900 | 21.000 |
| Chicken Fat | | 11.000 | 11.000 |
| Vitamins | | 0.090 | 0.090 |
| Other Additives | | 9.030 | 9.100 |
| Water | | 23.230 | 21.110 |
| Total | | 100 | 100 |

### Preparation of Flake Portion

The ingredients of the flake portion (fish meat, chicken tenderloin, and shredded meat, which are ingredients of the base meat shown in Table 2) were steamed. After steaming, the temperature of the basic ingredients of the flake portion was lowered to room temperature. From the basic ingredients of the flake portion, the temperature of which was lowered to room temperature, skin, bones, and other foreign matters were removed as necessary, to thereby prepare the flake portion.

### Preparation of Base Meat

And then, the base meat was prepared with ingredients of base meat shown in Table 2 with their blend ratios. The base meat thus prepared was packed in a pouch.

To the pouch filled with the base meat, fish meat as a topping shown in Table 2 with its blend ratio was added.

### Preparation of Soup Portion

Soup was prepared by blending ingredients of the soup portion (ingredients of soup shown in Table 2 with their blend ratios), separately from the base meat and the topping.

The pet food was prepared by further adding the soup to the pouch filled with the base meat and the topping.

**[Table 2]**

| Ingredients Blend Ratio (mass %) | | | Example 1 | Example 2 | Example 3 | Comparative Example 1 |
|---|---|---|---|---|---|---|
| Base Meat | Chunk | Portion 1 | 16.000 | 16.000 | 16.000 | - |
| | Chunk | Portion 2 | - | - | - | 20.000 |
| | Animal-derived Protein Raw Material | Fish Meat | 8.200 | 8.200 | 8.200 | 20.000 |
| | | Chicken Tenderloin | 8.200 | 8.200 | 8.200 | - |
| | Soy Oil | | 1.800 | 1.800 | 1.800 | 2.200 |
| | Thickener | | 0.530 | 0.530 | 0.530 | 0.530 |
| Topping | Animal-derived Protein Raw Material | Fish Meat | 1.333 | - | 6.333 | 3.334 |
| Soup | Thic | kener | 0.400 | 0.400 | 0.400 | 0.400 |
| | Fish | Extract | - | - | - | 0.200 |
| | Amino Ac | id Mixture | - | - | - | 2.000 |
| | Chicken | Extract | 1.400 | 1.400 | 1.400 | - |
| | Other A | dditives | 1.000 | 1.000 | 1.000 | - |
| | Wa | Water | 61.137 | 62.470 | 56.137 | 51.336 |
| Total | | | 100 | 100 | 100 | 100 |
| Total of Animal-derived Protein Raw Materials (mass %) | | | 22.493 | 21.160 | 27.493 | 30.874 |
| Total of Plant-derived Protein Raw Materials (mass %) | | | 4.304 | 4.304 | 4.304 | 4.200 |
| Content of Chicken Tenderloin in Animal-derived Protein Raw Materials (mass %) | | | 36.456 | 38.752 | 36.456 | - |
| Plant-derived Protein Raw Materials / Animal-derived Protein Raw Materials | | | 0.191 | 0.203 | 0.156 | 0.136 |

An amino acid mixture in Table 2 is an additive composed mainly of amino acids that is not prepared from chicken.

Chicken extract in Table 2 is a substance obtained by decomposing protein of chicken meat into amino acids, and is composed mainly of amino acids generated by decomposition of protein of chicken meat.

The protein contents measured according to the Kjeldahl method of the pet food of Example 1 and of the pet food of Comparative Example 1 were 10.8% by mass and 11.1% by mass, respectively. In addition, the water contents of the pet food of Example 1 and of the pet food of Comparative Example 1 were 81.4% by mass and 80.5% by mass, respectively. As used herein, the water content is a content of water in a pet food including moisture derived from ingredients other than water (for example, the animal-derived protein raw material and the plant-derived protein raw material).

The pet foods of Examples 1 to 3 and Comparative Example 1 were thus prepared. A pet food of Example 4 was prepared in the same way as the pet food of Example 1 except for replacing the chicken extract contained in the soup portion of the pet food with chicken liver hydrolysate.

A pet food of Example 5 was prepared in the same way as the pet food of Example 1 except for replacing the chicken tenderloin contained in the base meat of the pet food with beef.

A pet food of Comparative Example 2 was prepared in the same way as the pet food of Example 1 except for not including the chicken extract and increasing water content accordingly in the soup portion of the pet food.

### Mineral Content

The contents of minerals (magnesium, sodium, phosphorous and chlorine) in the solids of the pet foods of Example 1 and Comparative Example 1 were measured by ICP spectrometry. Results are shown in Table 3.

**[Table 3]**

| Mineral Amount (In terms of element content, Unit: mass %) | Mg | Na | P | Cl | Total |
|---|---|---|---|---|---|
| Example 1 | 0.062 | 0.700 | 0.530 | 1.250 | 2.542 |
| Comparative Example 1 | 0.082 | 2.730 | 1.560 | 2.920 | 7.292 |

As shown above, the mineral content in the solids of the pet foods of Example 1 is no greater than 5% by mass, which is smaller than the mineral content in the solids of the pet foods of Comparative Example 1. Therefore, the pet food of Example 1 is less likely to cause a urolith.

Variation ranges of mineral contents in the solids of the pet foods of Example 1 and Comparative Example 1 in each product lot are 0.29% and 1.79% respectively.

### Preference Evaluation Test

Preference evaluation test was conducted for the pet foods of Example 1 and Comparative Example 1 according to the following method. Results are shown in Table 4.

With a pair of the pet foods of Example 1 and Comparative Example 1, the test was conducted over 2 days with 20 cats of at least 1 year old as subjects.

On the first day, each of the cats was fed simultaneously with the pet foods of Example 1 and Comparative Example 1, 70 g each, the pet food of Example 1 from the observer's left and the pet food of Comparative Example 1 from the observer's right, and 1 hour later amounts consumed by cats were measured.

Based on a total weight of the pet food consumed by a given cat on the first day, the amount of the pet food of Example 1 consumed and the amount of the pet food of Comparative Example 1 consumed were obtained in percent. A result of the first day was obtained by averaging the amounts in percent obtained from 20 subject cats.

On the second day, each of the cats was fed simultaneously with the pet foods of Example 1 and Comparative Example 1, 70 g each, the pet food of Example 1 from the observer's right and the pet food of Comparative Example 1 from the observer's left, and 1 hour later amounts consumed by cats were measured.

Based on a total weight of the pet food consumed by a given cat on the second day, the amount of the pet food of Example 1 consumed and the amount of the pet food of Comparative Example 1 consumed were obtained in percent. A result of the second day was obtained by averaging the amounts in percent obtained from 20 subject cats.

Lastly, a ratio of amounts consumed (preference qualities) was obtained by averaging the results of the first day and the second day. The results are shown in Table 4, in which a higher value of preference indicates that consumption by the subject cats was more favorable.

With a pair of the pet foods of Example 2 and Comparative Example 1, pairs of the pet foods of Example 3 and Comparative Example 1, and a pair of the pet foods of Example 4 and Comparative Example 1, the preference evaluation tests were conducted in the same manner as the pair of the pet foods of Example 1 and Comparative Example 1. Results are shown in Table 4.

**[Table 4]**

| | | | | |
|---|---|---|---|---|
| Preference Qualities (Ratio) | Example 1: Comparative Example 1 | Example 2: Comparative Example 1 | Example 3: Comparative Example 1 | Example 4: Comparative Example 1 |
| | 67:33 | 63:37 | 65:35 | 67:33 |

Furthermore, with a pair of the pet foods of Example 5 and Comparative Example 1, pairs of the pet foods of Example 5 and Example 1, and a pair of the pet foods of Comparative Example 1 and Comparative Example 2, the preference evaluation tests were conducted in the same manner as the pair of the pet foods of Example 1 and Comparative Example 1. Results are shown in Table 5.

**[Table 5]**

| | | | |
|---|---|---|---|
| Preference Qualities (Ratio) | Example 5: Comparative Example 1 | Example 5: Example 1 | Comparative Example 1: Comparative Example 2 |
| | 59:41 | 40:60 | 52:48 |

The results of the preference evaluation tests showed that the pet foods of Examples 1 to 5 were superior in preference qualities to the pet food of Comparative Example 1. The pet foods of Examples 1 to 5, which have lower contents of the animal-derived protein raw material than the pet food of Comparative Example 1, are expected to be inferior in preference qualities. Nevertheless, the results of the preference evaluation tests showed that the preference qualities can be largely improved by using a predetermined preference improving substance even in a case of low content of the animal-derived protein raw material.

The preference evaluation tests also showed that the pet food of Example 1 was superior in preference qualities to the pet food of Example 5. The pet food of Example 1 contains chicken tenderloin in addition to the preference improving substance. This showed that the preference qualities can be improved by including chicken tenderloin in the pet food, in addition to the specific preference improving substance.

It should be noted that the pet food contains chicken tenderloin without the preference improving substance (Comparative Example 2) is not that superior in preference qualities to the pet food of Comparative Example 1 (refer to Table 5). This also showed importance of including the preference improving substance along with chicken tenderloin for vast improvement of the preference qualities.

Meanwhile, the pet food of Comparative Example 1 added with 15% by mass of chicken tenderloin with water content reduced accordingly (Reference Example 1), and the pet food of Comparative Example 1 added with 1.4% by mass of the chicken extract with water content reduced accordingly (Reference Example 2) were prepared and subjected to the preference evaluation test.

Results of the preference evaluation test conducted in the same way as those described above for a pair of Reference Example 1 and Comparative Example 1 and a pair of Reference Example 2 and Comparative Example 1 are shown in Table 6.

Table 6 shows that there is no significant difference in preference qualities between the pet foods of Reference Examples 1 and 2 and the pet food of Comparative Example 1. These facts also showed that employing the preference improving substance along with chicken tenderloin especially contributes to improvement of the preference qualities of pet foods.

**[Table 6]**

| | | |
|---|---|---|
| Preference Qualities (Ratio) | Reference Example 1: Comparative Example 1 | Reference Example 2: Comparative Example 1 |
| | 52:48 | 54:46 |

## Claims

1. A pet food containing at least 5% by mass and no greater than 50% by mass of solids, comprising:
an animal-derived protein raw material;
a plant-derived protein raw material;
magnesium, sodium, phosphorus and chlorine;
a preference improving substance composed mainly of a chicken-derived amino acid; and
water,
wherein: a ratio by mass of a total content of the plant-derived protein raw material to a total content of the animal-derived protein raw material (total content of the plant-derived protein raw material / total content of the animal-derived protein raw material) is at least 0.15; and
a total content of the magnesium, the sodium, the phosphorus and the chlorine in the solids is no greater than 5% by mass in terms of element content.

2. The pet food according to claim 1, wherein: the animal-derived protein raw material includes chicken tenderloin;
a content of the chicken tenderloin in the animal-derived protein raw material is at least 30% by mass and no greater than 60% by mass; and
a content of the preference improving substance is at least 0.3% by mass and no greater than 5% by mass.

3. The pet food according to claim 1 or 2, wherein the content of the magnesium in the solids is no greater than 0.07% by mass.

4. The pet food according to any one of claims 1 to 3, wherein the content of the sodium in the solids is no greater than 1.5% by mass.

5. The pet food according to any one of claims 1 to 4, wherein the content of the phosphorus in the solids is no greater than 1% by mass.

6. The pet food according to any one of claims 1 to 5, wherein the pet food is a food for cats.

7. The pet food according to claim 6, wherein the cats are at least 1 year old and no greater than 10 years old.
